# EUROPEAN PATENT SPECIFICATION

(11) **EP 2 716 712 B1**
(45) Date of publication and mention of the grant of the patent: **09.08.2017**
(21) Application number: 12792280.5
(22) Date of filing: 25.05.2012
(51) Int. Cl.: C08L 69/00, C08K 5/103, C08K 5/3475

(54) **POLYCARBONATE RESIN COMPOSITION AND MOLDED ARTICLE**
POLYCARBONATHARZZUSAMMENSETZUNG UND FORMARTIKEL
COMPOSITION DE RÉSINE DE POLYCARBONATE ET ARTICLE MOULÉ

(30) Priority: 31.05.2011 JP 2011122260
(43) Date of publication of application: 09.04.2014
(73) Proprietor: Idemitsu Kosan Co., Ltd, Tokyo 100-8321 (JP)
(72) Inventor: AKAMINE, Hiroshi, Ichihara-shi Chiba 299-0193 (JP); CHOSA, Munehiro, Ichihara-shi Chiba 299-0193 (JP)
(74) Representative: Hoffmann Eitle
(86) International application number: PCT/JP2012/063537
(87) International publication number: WO 2012/165352

(56) References cited:
- EP-A1- 2 287 655
- EP-A1- 2 657 294
- WO-A1-2009/145241
- JP-A- 2004 137 471
- JP-A- 2005 042 003
- JP-A- 2006 154 783

## Description

### TECHNICAL FIELD

The present invention relates to a polycarbonate resin composition and a molded article, and more specifically, to a polycarbonate resin composition having excellent weatherability, excellent transparency, and good releasability, and a molded article using the composition.

### BACKGROUND ART

A polycarbonate resin is known excellent in impact resistance, heat resistance, and transparency, and has been widely used in, for example, an optical disc substrate, glass alternate products such as a lens and a window glass, a carport roof, various parts for electrical and electronic equipment, and an automobile part by taking advantage of its features. However, the polycarbonate resin does not have sufficient light resistance against an influence of UV light. Thus, for example, its outdoor use, or indoor use under irradiation with light from a fluorescent lamp has been limited because the discoloration of a product using the resin or the reduction of its strength may occur. Accordingly, various UV absorbers have heretofore been used alone or in combination of several kinds. In particular, a benzotriazole-based UV absorber having a molecular structure containing a benzotriazole skeleton, the absorber having a UV-absorbing ability mainly in a wavelength region of 300 to 350 nm, has been generally used because its effect is relatively large (see Patent Document 1 or 2).

Meanwhile, a releasing agent has been used in the polycarbonate resin for improving its releasability at the time of molding, and fatty acid esters, a polyolefin-based wax, a fluorine oil, a paraffin wax, and the like have each been known as the releasing agent. A method using fatty acid esters out of those releasing agents has been widely known, and glycerin monostearate out of the esters has been frequently used. However, when the releasability of a molded article is not sufficient, a polycarbonate resin composition for an optical disc substrate in which the addition amount of only glycerin monostearate is merely increased may impair long-term data storage stability (hydrolysis resistance). Accordingly, it has been known that a pentaerythritol fatty acid full ester is used in combination with a fatty acid monoglyceride such as glycerin monostearate upon molding of a molding material for an optical disc substrate (see Patent Document 3). In addition, a polycarbonate resin composition excellent in transparency, weatherability, releasability, heat resistance, and the like, the composition being obtained by using a specific pentaerythritol fatty acid full ester and a UV absorber in combination with the polycarbonate resin, has been known (see Patent Document 4). In addition, a polycarbonate resin composition having excellent releasability and excellent hydrolysis resistance without impairing impact resistance and heat resistance, the composition being obtained by using a pentaerythritol fatty acid full ester in which the amounts of metallic elements (tin, sodium, calcium, and zinc) are equal to or less than specific amounts as a releasing agent upon blending of the releasing agent into the polycarbonate resin, has been known (see Patent Document 5).

The inventors of the present invention have found that upon combined use of the pentaerythritol fatty acid full ester and the benzotriazole-based UV absorber with the polycarbonate resin, a problem in that an effect of the UV absorber is not sufficiently exerted occurs, and as a result, have made the present invention. However, none of Patent Documents 3 to 5 above suggests such problem and the like.

### CITATION LIST

### PATENT DOCUMENT

[Patent Document 1] JP 07-216206 A
[Patent Document 2] JP 2003-301101 A
[Patent Document 3] JP 2007-242126 A
[Patent Document 4] JP 2004-27105 A
[Patent Document 5] JP 2005-42003 A

### SUMMARY OF INVENTION

### TECHNICAL PROBLEM

An object of the present invention is to provide a polycarbonate resin composition obtained by blending a full ester of pentaerythritol and an aliphatic carboxylic acid as a releasing agent, and a benzotriazole-based UV absorber as a UV absorber into a polycarbonate resin, the resin composition being free of reducing an effect of the benzotriazole-based UV absorber to be used and being excellent in releasability, and a molded article using the composition.

### SOLUTION TO PROBLEM

The inventors of the present invention have conducted extensive studies on the following problem: upon combined use of a pentaerythritol fatty acid full ester and a benzotriazole-based UV absorber with a polycarbonate resin, an effect of the UV absorber is not sufficiently exerted on a polycarbonate resin composition to be obtained. As a result, the inventors have found that a specific metal component incorporated as an impurity into the pentaerythritol fatty acid full ester has an influence on the exertion, and hence have completed the present invention.

That is, the present invention provides the following polycarbonate resin composition and molded article.
1. A polycarbonate resin composition, which is obtained by blending, into 100 parts by mass of (A) a polycarbonate resin, 0.1 to 0.4 parts by mass of (B) a full ester of pentaerythritol and an aliphatic carboxylic acid, and 0.1 to 0.4 parts by mass of (C) a benzotriazole-based UV absorber, in which a content of each of calcium and sodium in the component (B) is 15 ppm or less.
2. The polycarbonate resin composition according to the item 1, in which the component (B) is a full ester of pentaerythritol and an aliphatic carboxylic acid having 12 to 22 carbon atoms.
3. The polycarbonate resin composition according to the item 1 or 2, in which the component (B) is a mixture of a pentaerythritol palmitic acid full ester and a pentaerythritol stearic acid full ester.
4. The polycarbonate resin composition according to the item 3, in which a mixing ratio between the pentaerythritol palmitic acid full ester and the pentaerythritol stearic acid full ester in the component (B) is 9:1 to 1:9.
5. The polycarbonate resin composition according to any one of the items 1 to 4, in which (C) the benzotriazole-based UV absorber is 2-(2'-hydroxy-5'-tert-octylphenyl)benzotriazole and/or 2,2'-methylenebis[4-(1,1,3,3-tetramethylbutyl)-6-(2N-benzotria zol-2-yl)phenol].
6. A molded article, which is obtained by molding the polycarbonate resin composition according to any one of the items 1 to 5.

### ADVANTAGEOUS EFFECTS OF INVENTION

According to the present invention, it is possible to provide the polycarbonate resin composition obtained by blending a full ester of pentaerythritol and an aliphatic carboxylic acid as a releasing agent, and a benzotriazole-based UV absorber as a UV absorber into a polycarbonate resin, the resin composition being free of reducing an effect of the benzotriazole-based UV absorber to be used and being excellent in releasability, and the molded article using the composition.

### DESCRIPTION OF EMBODIMENTS

A polycarbonate resin composition of the present invention is a polycarbonate resin composition obtained by blending (A) a polycarbonate resin, (B) a specific full ester of pentaerythritol and an aliphatic carboxylic acid, and (C) a benzotriazole-based UV absorber. Hereinafter, each component and any other component that can be added are described.

### [(A) Polycarbonate resin]

In the present invention, (A) the polycarbonate resin may be an aromatic polycarbonate resin or an aliphatic polycarbonate resin, but the aromatic polycarbonate resin is preferably used because the resin is more excellent in impact resistance and heat resistance.

### (Aromatic polycarbonate resin)

An aromatic polycarbonate resin produced by a reaction between a dihydric phenol and a carbonate precursor can be typically used as the aromatic polycarbonate resin. The aromatic polycarbonate resin can be used as a main component of the resin composition because the resin is superior in heat resistance, flame retardancy, and impact resistance to any other thermoplastic resin.

Examples of the dihydric phenol may include: 4,4'-dihydroxydiphenyl; bis(4-hydroxyphenyl)alkanes such as 1,1-bis(4-hydroxyphenyl)methane, 1,1-bis(4-hydroxyphenyl)ethane, and 2,2-bis(4-hydroxyphenyl)propane [bisphenol A]; bis(4-hydroxyphenyl)cycloalkane; bis(4-hydroxyphenyl)oxide; bis(4-hydroxyphenyl)sulfide; bis(4-hydroxyphenyl)sulfone; bis(4-hydroxyphenyl)sulfoxide; and bis(4-hydroxyphenyl)ketone. Of those, bisphenol A is preferred. The dihydric phenol may be a homopolymer using one of the dihydric phenols, or may be a copolymer using two or more thereof. Further, a thermoplastic and randomly branched polycarbonate resin obtained by using a polyfunctional aromatic compound and the dihydric phenol in combination is permitted.

Examples of the carbonate precursor include a carbonyl halide, a haloformate, and a carbonate ester. Specific examples thereof include phosgene, dihaloformate of a dihydric phenol, diphenyl carbonate, dimethyl carbonate, and diethyl carbonate.

A terminal stopper can be used as required in the production of the aromatic polycarbonate resin to be used in the present invention. A terminal stopper know in the production of an aromatic polycarbonate resin may be used as the terminal stopper. Specific examples of such chemicals may include phenol, p-cresol, p-tert-butylphenol, p-tert-octylphenol, p-cumylphenol, p-nonylphenol, and p-tert-amylphenol. Those monohydric phenols may each be used alone, or two or more thereof may be used in combination.

The aromatic polycarbonate resin to be used in the present invention may have a branched structure. A branching agent may be used to introduce a branched structure, and there may be used, for example, chemicals each having three or more functional groups such as 1,1,1-tris(4-hydroxyphenyl)ethane, α,α',α"-tris(4-hydroxyphenyl)-1,3,5-triisopropylbenzene, 1-[α-methyl-α-(4'-hydroxyphenyl)ethyl]-4-[α',α'-bis(4"-hydroxyphenyl)ethyl]benze ne, phloroglucin, trimellitic acid, and isatinbis(o-cresol).

The aromatic polycarbonate resin to be used in the present invention has a viscosity-average molecular weight of preferably 10,000 to 40,000, more preferably 13,000 to 30,000 in terms of the physical properties of the resin composition.

In addition, in the present invention, when the aromatic polycarbonate resin is an aromatic polycarbonate-polyorganosiloxane copolymer, or a resin containing the aromatic polycarbonate-polyorganosiloxane copolymer is used as the aromatic polycarbonate resin, flame retardancy and impact resistance at low temperature can be improved. The polyorganosiloxane constituting the copolymer is more preferably polydimethylsiloxane in terms of flame retardancy.

### [(B) Full ester of pentaerythritol and aliphatic carboxylic acid]

In the present invention, (B) the full ester of pentaerythritol and the aliphatic carboxylic acid is used for improving releasability upon molding of the polycarbonate resin composition of the present invention. The full ester of pentaerythritol and the aliphatic carboxylic acid is obtained by subjecting pentaerythritol and the aliphatic carboxylic acid to an esterification reaction to provide a full ester.

Here, an aliphatic carboxylic acid having 12 to 30 carbon atoms can be preferably used as a constituent for the full ester.

Such aliphatic carboxylic acid is typically produced from various vegetable fats and oils, and animal fats and oils, and these fats and oils are ester compounds containing various fatty acids as their components. Accordingly, for example, stearic acid produced from the vegetable fats and oils, and animal fats and oils typically contains large amounts of other fatty acid components such as palmitic acid. In the present invention, a mixed fatty acid containing a plurality of fatty acids produced from such vegetable fats and oils, and animal fats and oils may be used, or a fatty acid subjected to purification and separation may be used.

In addition, out of the aliphatic carboxylic acids each having 12 to 30 carbon atoms, an aliphatic carboxylic acid having 12 to 22 carbon atoms is preferred. In addition, a saturated fatty acid out of the aliphatic carboxylic acids is preferably used, and in particular, a saturated fatty acid having 12 to 22 carbon atoms is more preferably used. Of the saturated fatty acids each having 12 to 22 carbon atoms, stearic acid, palmitic acid, or behenic acid is preferred.

Accordingly, preferred specific compounds to be used as the full ester of pentaerythritol and the aliphatic carboxylic acid are a pentaerythritol stearic acid full ester, a pentaerythritol palmitic acid full ester, and a pentaerythritol behenic acid full ester.

In addition, in particular, a mixture in which a mixing ratio between the pentaerythritol palmitic acid full ester and the pentaerythritol stearic acid full ester is 9:1 to 1: 9, more preferably 5:5 to 3:7 in terms of a mass ratio is preferably used from the viewpoint of, for example, the consideration of compatibility with the European REACH standard. For example, the pentaerythritol stearic acid full ester has already been preliminarily registered as an existing substance in the REACH because the full ester has heretofore been widely used as a releasing agent; in contrast, the pentaerythritol palmitic acid full ester needs to be preliminarily registered as a new substance anew. However, a cost for definitive registration is high and a procedure therefor is additionally complicated. Accordingly, a mixture having so high a composition ratio of the pentaerythritol stearic acid full ester as to be capable of being handled as the pentaerythritol stearic acid full ester is preferably used. For example, the following is also the reason why the composition ratio of the pentaerythritol stearic acid full ester is preferably as high as possible: the pentaerythritol stearic acid full ester whose carbon chain has 18 carbon atoms (C18) is more excellent in releasing performance when used in a resin composition than the pentaerythritol palmitic acid full ester whose carbon chain has 16 carbon atoms (C16).

In the present invention, the content of each of calcium and sodium in the full ester of pentaerythritol and the aliphatic carboxylic acid as the component (B) needs to be 15 ppm or less. When the content of at least one of calcium and sodium exceeds 15 ppm, an effect of the benzotriazole-based UV absorber to be used as the component (C) of the present invention is not sufficiently exerted, and the mechanical strengths such as impact resistance reduce. As a result of various studies, the inventors of the present invention have found that the foregoing is due to the following: when such full ester of pentaerythritol and the aliphatic carboxylic acid as described above, and the benzotriazole-based UV absorber are used in combination with the polycarbonate resin, and the resin composition are melted and kneaded with an extruder or the like, a terminal carbonyl bond site of the polycarbonate resin subjected to molecular cleavage and the benzotriazole-based UV absorber cause an ester exchange reaction.

Although a mechanism for the reaction is unknown, the reaction is assumed to be caused as follows: while each of calcium and sodium incorporated as impurities into the full ester of pentaerythritol and the aliphatic carboxylic acid accelerates the molecular cleavage of the polycarbonate resin, a UV absorber having benzotriazole skeleton also easily coordinates any such metal ion by nature and hence the nucleophilicity of terminal OH of the adjacent UV absorber is improved by the coordination.

Probably as a result of the foregoing, the amount of an unreacted benzotriazole-based UV absorber remaining in the resin composition out of the blended benzotriazole-based UV absorber reduces, the original effect of the UV absorber is not sufficiently exerted, and the mechanical strengths such as impact resistance reduce owing to the molecular cleavage of the polycarbonate resin. Such phenomenon may be a phenomenon specific to the case where the full ester of pentaerythritol and the aliphatic carboxylic acid as the component (B), and the benzotriazole-based UV absorber to be used as the component (C) are used in combination.

In the present invention, the content of each of calcium and sodium in the full ester of pentaerythritol and the aliphatic carboxylic acid as the component (B) needs to be 15 ppm or less in order that the above influence may be avoided. The contents of calcium and sodium are more preferably 1 ppm or less and 12 ppm or less, respectively, and the contents of calcium and sodium are still more preferably 0.5 ppm or less and 10 ppm or less, respectively.

In the present invention, not only calcium and sodium to be incorporated into the releasing agent as the component (B) but also calcium and sodium in the polycarbonate resin as the component (A) and/or the UV absorber as the component (C) may cause problems. As far as the inventors of the present invention have investigated, however, a problem in that mechanical strengths such as impact resistance reduce as compared with those in the presence of the releasing agent as the component (B) has not been remarkably observed in a resin composition free of the component (B), which is obtained by blending: the polycarbonate resin as the component (A); the UV absorber as the component (C); and an antioxidant as a component (D).

In the present invention, attention has been paid to the contents/content of sodium and/or calcium because the reaction is caused by the coordination to the triazole skeleton. In addition, it has also been widely known that tin, zinc, or the like is a typical catalyst that accelerates ester exchange, and titanium or the like is used as a dehydration catalyst as well. Accordingly, the content of tin, zinc, titanium, or the like is desirably set so as to be equal to or less than the levels of sodium and calcium described in the present invention.

Although the full ester of pentaerythritol and the aliphatic carboxylic acid in which the content of each of calcium and sodium is 15 ppm or less to be used in the present invention, the content of one of calcium and sodium in a commercially available full ester exceeds 15 ppm. In the present invention, a commercially available full ester of pentaerythritol and an aliphatic carboxylic acid in which the content of one, or each of both, of calcium and sodium exceeds 15 ppm can be used after the content of each of calcium and sodium has been reduced to 15 ppm or less through purification with an adsorbent using magnesium, aluminum, silicon, or the like as a main component as described in, for example, a production example of JP 2004-137423 A.

### [(C) Benzotriazole-based UV absorber]

In the present invention, (C) the benzotriazole-based UV absorber is used as the UV absorber.

Examples of the benzotriazole-based UV absorber (C) to be used in the present invention include 2-(5-methyl-2-hydroxyphenyl) benzotriazole, 2-(2-hydroxy-4-octyloxyphenyl)benzotriazole, 2-[2-hydroxy-3,5-bis(α,α-dimethylbenzyl)phenyl]-2H-benzotriazo le, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)benzotriazole, 2-(2'-hydroxy-5'-t-octylphenyl)benzotriazole, 2-[2-hydroxy-3-(3,4,5,6-tetrahydrophthalimidemethyl)-5-methylphenyl]benzotriazole, 2,2'-methylenebis[4-(1,1,3,3-tetramethylbutyl)-6-(2H-benzotria zol-2-yl)phenol], and a condensate with methyl-3-[3-t-butyl-5-(2H-benzotriazol-2-yl)-4-hydroxyphenyl]propionate-polyethylene glycol (molecular weight: about 300). Of those, 2-[2-hydroxy-3,5-bis(α,α-dimethylbenzyl)phenyl]-2H-benzotriazole, 2-(2'-hydroxy-5'-t-octylphenyl)benzotriazole, or 2,2'-methylenebis[4-(1,1,3,3-tetramethylbutyl)-6-(2H-benzotriazol-2-yl)phenol] is particularly preferably used. Each of those UV absorbers may be used alone, or two or more thereof may be used as a mixture.

### [Re: blending ratios of components (A), (B), and (C)]

The blending ratios of (A) the polycarbonate resin, (B) the full ester of pentaerythritol and the aliphatic carboxylic acid, and (C) the benzotriazole-based UV absorber are as follows: with respect to 100 parts by mass of the component (A), the component (B) is used in an amount of 0.1 to 0.4 parts by mass, preferably 0.13 to 0.35 parts by mass, and the component (C) is used in an amount of 0.1 to 0.4 parts by mass, preferably 0.2 to 0.35 parts by mass. When the amount of the component (B) is less than 0.1 parts by mass, the releasability is poor, and when the amount exceeds 0.4 parts by mass, a problem such as the coloring of the composition or the reduction of its molecular weight may occur. In addition, when the amount of the component (C) is less than 0.1 parts by mass, the UV-absorbing ability is poor and weatherability deteriorates. In addition, an amount in excess of 0.4 parts by mass is not preferred because a die may be contaminated.

### [Re: any other addition component]

In the polycarbonate resin compositionof the present invention, the heat stability of the composition can be improved by adding a phenol-, phosphorus-, or sulfur-based antioxidant at 30 to 1,000 massppm, preferably 100 to 600 massppm with respect to the component (A) together with the component (A), the component (B), and the component (C).

The phenol-based antioxidant is not particularly limited, and a hindered phenol-based antioxidant is suitably used. Typical examples thereof include octadecyl-3-(3,5-di-tert-butyl-4-hydroxyphenyl)propionate, triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythrityl-tetrakis[3-(3,5-di-tert-butyl-4-hydroxyphenyl) propionate], N,N'-hexamethylenebis[(3,5-di-tert-butyl-4-hydroxy)-hydrocinnamamide], 2,2-thio-diethylene bis[3-(3,5-di-tert-butyl-4-hydroxyphenyl)propionate], 2,4-bis(n-octylthio)-6-(4-hydroxy-3,5-di-tert-butylanilino)-1,3,5-triazine, 1,3,5-trimethyl-2,4,6-tris(3,5-di-tert-butyl-4-hydroxybenzyl)benzene, tris-(3,5-di-tert-butyl-4-hydroxybenzyl)-isocyanurate, and calcium bis(ethyl 3,5-di-tert-butyl-4-hydroxybenzylphosphonate).

The phosphorus-based antioxidant is not particularly limited. Typical examples thereof include: tris(nonylphenyl) phosphite; 2-ethylhexyl diphenyl phosphite; trialkyl phosphites such as trimethyl phosphite, triethyl phosphite, tributyl phosphite, trioctyl phosphite, trinonyl phosphite, tridecyl phosphite, trioctadecyl phosphite, distearyl pentaerythrityl diphosphite, tris(2-chloroethyl) phosphite, and tris(2,3-dichloropropyl) phosphite; tricycloalkyl phosphites such as tricyclohexyl phosphite; triaryl phosphites such as triphenyl phosphite, tricresyl phosphite, tris(ethylphenyl) phosphite, tris(butylphenyl) phosphite, tris(hydroxyphenyl) phosphite, and tris(2,4-di-tert-butylphenyl) phosphite; trialkyl phosphates such as trimethyl phosphate, triethyl phosphate, tributyl phosphate, trioctyl phosphate, tridecyl phosphate, trioctadecyl phosphate, distearyl pentaerythrityl diphosphate, tris(2-chloroethyl) phosphate, and tris(2,3-dichloropropyl) phosphate; tricycloalkyl phosphates such as tricyclohexy-1-phosphate; and triaryl phosphates such as triphenyl phosphate, tricresyl phosphate, tris(nonylphenyl) phosphate, and 2-ethylphenyldiphenyl phosphate. Of those, triaryl phosphites and triaryl phosphates are suitably used.

To the polycarbonate resin composition of the present invention, there can be appropriately be added, as the other additive, an inorganic filler such as a glass fiber, glass powder, a carbon fiber, talc, and mica, a flame retardant, a flame retardant promoter, an antistatic agent, a polyamide-polyether block copolymer (for imparting permanent antistatic performance), an antibacterial agent, a compatibilizer, a colorant (dyestuff or pigment), and the like as required.

### [Compounding and molding]

The polycarbonate resin composition of the present invention is obtained by: blending the component (A), the component (B), and the component (C) at the above-mentioned ratios, and additive components to be used as required at appropriate ratios; and kneading the components. The blending and kneading in this case can be performed by a method involving preliminarily mixing the components with a generally used device such as a ribbon blender and a drum tumbler, and using a Henschel mixer, a Banbury mixer, a single-screw extruder, a twin-screw extruder, a multi-screw extruder, a co-kneader, or the like.

A heating temperature during the kneading is appropriately selected from the range of 240 to 300°C in ordinary cases.

Various molded articles can be produced by using the polycarbonate resin composition of the present invention with the melt-kneading molding machine or a pellet obtained from the composition as a raw material by an injection molding method, an injection compression molding method, an extrusion molding method, a blow molding method, a press molding method, a vacuum forming method, a foam molding method, and the like. In particular, a pellet-like molding raw material can be produced by the melt/kneading method and then the pellet can be suitably used in the production of an injection-molded article by injection molding or injection compression molding.

The present invention provides a molded article obtained by molding the polycarbonate resin composition of the present invention as well. The molded article obtained by molding the polycarbonate resin composition of the present invention, preferably an injection-molded article (including injection compression) is used in, for example, optical materials such as an optical disc substrate, OA equipment such as a copying machine, a facsimile, a television, a radio, a tape recorder, a video cassette recorder, a personal computer, a printer, a telephone, a data terminal, a refrigerator, and a microwave oven, home electric appliances, and various members such as the housing of electrical and electronic equipment, and a structural member therefor, an automobile member, and a building member.

### EXAMPLES

Hereinafter, the present invention is described in more detail by way of examples.

Performance tests for resin compositions obtained in the respective examples were performed as described below.

### (1) Viscosity number

The viscosity number of an obtained pellet was measured in conformity with ISO 1628. In addition, the difference (ΔVN) was determined from the viscosity number of a polycarbonate resin used.

### (2) Measurement of PC-UVA reaction ratio (%) and remaining UVA (ppm)

A PC-UVA reaction ratio represents the ratio of a benzotriazole-based UV absorber used that reacted with the polycarbonate. A measurement method therefor is as described below. Each composition, bisphenol A and p-tert-butylphenol as raw materials for the polycarbonate resin as the component (A), a full ester of pentaerythritol and an aliphatic carboxylic acid as the component (B), and the benzotriazole-based UV absorber as the component (C), in the pellet was calculated from the signal intensities by 1H-NMR. The total amount of the component (C) as the UV absorber was calculated from the composition ratio. Next, a signal specific to the UV absorber is observed at 8.41 ppm in a ¹H-NMR spectrum. The signal is observed at 8.25 ppm when the UV absorber reacts with the polycarbonate. A polycarbonate-UV absorber reaction ratio (PC-UVA reaction ratio (%)) was calculated from an intensity ratio between both of these signals. In addition, the amount of the remaining UV absorber (remaining UVA (ppm)) was calculated from the reaction ratio and the total amount of the component (C). It should be noted that a measurement method for ¹H-NMR is as described below. 40 Milligrams of a sample were collected in an NMR sample tube having a diameter of 5 mm and then the sample was uniformly dissolved in 0.5 ml of deuterated chloroform at room temperature, followed by measurement with a 500 MHz NMR (ECA-500) manufactured by JEOL Ltd. under the following conditions: pulse width: 45°, pulse repetition time: 9 seconds, number of times of integration: 256, chemical shift standard: tetramethylsilane, measurement temperature: room temperature, BF value: 0.1.

### (3) Weatherability

A weatherability test was performed by the following method.

A test piece was taken out from a sunshine weather meter (SUGA SUNSHINE SUPER LONG-LIFE WEATHER) after 500 hours: conditions are as follows: black panel temperature: 63°C, humidity: 50%, rainfall cycle: 12/60 minutes (a rainfall duration out of 60 minutes was 12 minutes), irradiation intensity (300 to 400 nm) : 78.5W/m². After that, the sample was visually observed.

Symbol "A" represents a state where the surface appearance of the sample is good.

Symbol "B" represents a state where haze is observed on the surface.

Symbol "X" represents a state where remarkable surface roughness is observed.

### (4) Measurement of remaining releasing agent (ppm)

Each composition in the pellet was calculated from the signal intensities of bisphenol A and p-tert-butylphenol as raw materials for the polycarbonate resin as the component (A), the full ester of pentaerythritol and the aliphatic carboxylic acid as the component (B), and the benzotriazole-based UV absorber as the component (C) by ¹H-NMR. The total amount of the component (B) as a releasing agent was measured from the composition ratio. Next, a signal specific to the releasing agent is observed at 4.12 ppm in the ¹H-NMR spectrum. The signal is observed at 4.18 ppm when the releasing agent reacts with the polycarbonate. A polycarbonate-releasing agent reaction ratio was calculated from an intensity ratio between both of these signals and then the amount of the remaining releasing agent was calculated from the total amount of the releasing agent (the total amount of the component (B)).

### (5) Releasability

A releasability test was performed by the following method.

Injection molding is performed with a box shaped molding tool sized 80 mm by 160 mm and having a depth of 40 mm, a draft angle of 0°, and a basic wall thickness of 3 mm, the tool having one pinpoint gate at the central portion of a product, under the conditions of a cylinder temperature of an injection molding machine of 300°C and a die temperature of 40°C. A release pressure needed for ejecting a molded article from mold tool at the time of the molding is measured. The release pressure is measured under at least three conditions, i.e., a standard condition, and such conditions that a product weight is increased and reduced as compared with that under the standard condition. Relationships between the weights of products obtained by molding the respective evaluation materials and the release pressures were compared, and then a difference in releasability was evaluated and judged.

Symbol "A" represents a state where the release pressure under the standard condition is less than 45 kg/cm².

Symbol "B" represents a state where the release pressure under the standard condition is 45 kg/cm² or more and less than 50 kg/cm².

Symbol "X" represents a state where the release pressure under the standard condition is 50 kg/cm² or more.

In addition, the respective components used in the respective examples are as described below.

### (A) Polycarbonate resin:

FN2200: A bisphenol A polycarbonate resin having a viscosity number of 56.5 and a viscosity-average molecular weight of 22,000 (manufactured by Idemitsu Kosan Co., Ltd.)

### (B) Full ester of pentaerythritol and aliphatic carboxylic acid

(B-1): Used was a mixture of a pentaerythritol stearic acid full ester and a pentaerythritol palmitic acid full ester (mixing ratio: C16:C18=1:1.1) having a calcium content of less than 0.5 ppm (lower than a lower detection limit) and a sodium content of 1ppm. The (B-1) is obtained by subjecting a commercially available EW440A manufactured by Riken Vitamin Co., Ltd. to adsorption with a KYOWARD 600 (manufactured by KYOWA CHEMICAL Corporation), and then filtering and separating the resultant.
(B-2) : Used was a mixture of a pentaerythritol stearic acid full ester and a pentaerythritol palmitic acid full ester (mixing ratio: C16:C18=1:1.1) having a calcium content of less than 0.5 ppm (lower than a lower detection limit) and a sodium content of 10ppm. The (B-2) is obtained by subjecting a commercially available EW480A manufactured by Riken Vitamin Co., Ltd. to adsorption with a KYOWARD 600 (manufactured by KYOWA CHEMICAL Corporation), and then filtering and separating the resultant.
(B-3) : Used was a mixture of a pentaerythritol stearic acid full ester and a pentaerythritol palmitic acid full ester (mixing ratio: C16:C18=1:1.1) having a calcium content of 0.8 ppm and a sodium content of 18 ppm. The (B-3) is obtained by subjecting a commercially available Cognis VPG861 manufactured by Cogins Japan to adsorption with a KYOWARD 600 (manufactured by KYOWA CHEMICAL Corporation), and then filtering and separating the resultant.
(B-4) : Used was a mixture of a pentaerythritol stearic acid full ester and a pentaerythritol palmitic acid full ester (RIKESTER EW-440A manufactured by Riken Vitamin Co., Ltd.) (mixing ratio: C16:C18=1:1.1) having a calcium content of 2.0 ppm and a sodium content of 24 ppm.

It should be noted that the calcium content and the sodium content were measured as described below. A calibration curve was made by using a solution prepared by dissolving 0.5 g of each of the samples (B-1) to (B-4) in 25 g of NMP for electronic industry and a high-frequency inductively coupled plasma mass spectrometer (ICP-MS manufactured by Seiko Instruments Inc. , SPQ9000), followed by quantitative measurement.

### (C) Benzotriazole-based UV absorber

(C-1): 2-(2'-Hydroxy-5'-t-octylphenyl)benzotriazole (manufactured by SHIPRO KASEI KAISHA, LTD., SEESORB 709G)

### (D) Antioxidant

(D-1): A phosphorus-based antioxidant, tris(2,4-di-t-butylphenyl) phosphite (manufactured by Ciba Specialty Chemicals, IRGAFOS 168)
(D-2): A phenol-based antioxidant (manufactured by Ciba Specialty Chemicals, IRGANOX 1076)

### Examples 1 to 4 and Comparative Examples 1 to 6

The respective components were blended at ratios shown in Table 1, and then the mixture was supplied to a TWIN-SCREW extruder equipped ventilation system (TEM37SS manufactured by TOSHIBA MACHINE CO., LTD., diameter of an extrusion portion: 50 mm) and pelletized at a cylinder temperature of 280°C. The resultant pellet was dried at 120°C for 4 hours and then subjected to injection molding to produce a test piece. The molding was performed with an injection molding machine (model name: IS-100EN, manufactured by TOSHIBA MACHINE CO., LTD.) at a molding temperature of 280°C and a molding tool temperature of 80°C. The resultant pellet and test piece were evaluated for their performances by the various evaluation tests. Table 1 shows the results. In addition, Table 2 shows metal components in the (B-1) to (B-4) used.

**Table 1**

| | | | | Example | | | | Comparative Example | | | | | |
|---|---|---|---|---|---|---|---|---|---|---|---|---|---|
| | | | | 1 | 2 | 3 | 4 | 1 | 2 | 3 | 4 | 5 | 6 |
| Resin composition | (A) | Polycarbonate resin (parts by mass) | FN2200 | 100 | 100 | 100 | 100 | 100 | 100 | 100 | 100 | 100 | 100 |
| | (B) | Full ester of pentaerythritol and aliphatic carboxylic acid (parts by mass) | (B-1) | 0.2 | - | 0.3 | - | - | - | - | - | - | - |
| | | | (B-2) | - | 0.2 | - | 0.3 | - | - | - | - | - | - |
| | | | (B-3) Comparative product | - | - | - | - | 0.2 | - | - | - | - | - |
| | | | (B-4) Comparative product | - | - | - | - | - | 0.2 | 0.2 | 0.2 | 0.15 | 0.1 |
| | (C) | Benzotriazole-base dUV absorber (parts by mass) | (C-1) | 0.3 | 0.3 | 0.2 | 0.2 | 0.3 | 0.3 | 0.3 | 0.3 | 0.3 | 0.3 |
| | (D) | Antioxidant (ppm) | (D-1) | 230 | 230 | 230 | 230 | 230 | 230 | 500 | 230 | 230 | 230 |
| | | | (D-2) | - | - | - | - | - | - | - | 170 | - | - |
| Performance evaluation | | Pellet viscosity number (VN) | | 56.2 | 56.2 | 56.2 | 56.1 | 54.1 | 51.5 | 51.4 | 52.3 | 56.2 | 56.1 |
| | | ΔVN | | -0.3 | -0.3 | -0.3 | -0.4 | -2.4 | -5.0 | -5.1 | -4.2 | -0.3 | -0.4 |
| | | PC-UVA reaction ratio (%) | | 0 | 0 | 0 | 0 | 23 | 81 | 83 | 79 | 3 | 0 |
| | | Remaining UVA (ppm) | | 2,850 | 2,460 | 2,610 | 2,520 | 2,300 | 530 | 480 | 610 | 2,460 | 2,610 |
| | | Weatherability | | A | A | A | A | A | X | X | X | B | A |
| | | Remaining releasing agent (ppm) | | 2,060 | 2,160 | 2,040 | 2,030 | 1,900 | 1,970 | 1,940 | 1,930 | 1,620 | 1,190 |
| | | Releasability | | A | A | A | A | A | A | A | A | B | X |

The blending amounts of the component (B) and the component (C) are represented in a "parts by mass" unit with respect to 100 parts by mass of the component (A).
The blending amount of the component (D) is represented in a massppm unit with respect to 100 parts by mass of the component (A).

**Table 2**

| | (B-1) | (B-2) | (B-3) | (B-4) |
|---|---|---|---|---|
| Na | 1 | 10 | 18 | 24 |
| Ti | 10 | < 0.5 | < 0.5 | < 0.5 |
| Sn | 0.7 | < 0.5 | 1 | < 0.5 |
| Ca | < 0.5 | < 0.5 | 0.8 | 2.0 |
| Zn | < 0.5 | < 0.5 | < 0.5 | < 0.5 |
| | | | | (ppm) |

Table 1 showed the following. In each of Examples 1 to 4, upon blending of (B) the full ester of pentaerythritol and the aliphatic carboxylic acid, and (C) the benzotriazole-based UV absorber into (A) the polycarbonate resin, a polycarbonate resin composition that does not reduce an effect of the benzotriazole-based UV absorber to be used and is excellent in releasability, and a molded article using the composition can be obtained as long as the content of each of calcium and sodium in the component (B) is 15 ppm or less. It is also found that in each of Comparative Examples 1 to 6, when the content of at least one of calcium and sodium in the component (B) exceeds 15 ppm, the amount of the remaining benzotriazole-based UV absorber reduces and the UV absorber corresponding to the reduction reacts with the polycarbonate resin.

### INDUSTRIAL APPLICABILITY

The polycarbonate resin composition of the present invention provides a molded article that: does not reduce an effect of a benzotriazole-based UV absorber upon combined use of a full ester of pentaerythritol and an aliphatic carboxylic acid, and the UV absorber; and is excellent in releasability. The polycarbonate resin composition of the present invention can suitably use in industrial members requiring those characteristics, in particular, optical materials such as an optical disc substrate, the housing of electrical and electronic equipment, information and communication equipment, or OA equipment, and a structural member therefor, an automobile member, a building member, and the like.

## Claims

1. A polycarbonate resin composition, which is obtained by blending, into 100 parts by mass of (A) a polycarbonate resin,
0.1 to 0.4 parts by mass of (B) a full ester of pentaerythritol and an aliphatic carboxylic acid, and
0.1 to 0.4 parts by mass of (C) a benzotriazole-based UV absorber,
wherein a content of calcium and sodium in the component (B) is 15 ppm or less, wherein the content of calcium and sodium is determined by using the condition and equipment as described in the description.

2. The polycarbonate resin composition according to claim 1, wherein the component (B) is a full ester of pentaerythritol and an aliphatic carboxylic acid having 12 to 22 carbon atoms.

3. The polycarbonate resin composition according to claim 1 or 2, wherein the component (B) is a mixture of a pentaerythritol palmitic acid full ester and a pentaerythritol stearic acid full ester.

4. The polycarbonate resin composition according to claim 3, wherein a mixing ratio between the pentaerythritol palmitic acid full ester and the pentaerythritol stearic acid full ester in the component (B) is 9:1 to 1:9.

5. The polycarbonate resin composition according to any one of claims 1 to 4, wherein (C) the benzotriazole-based UV absorber is 2-(2'-hydroxy-5'-tert-octylphenyl)benzotriazole and/or 2,2'-methylenebis[4-(1,1,3,3-tetramethylbutyl)-6-(2N-benzotri azol-2-yl)phenol].

6. The polycarbonate resin composition according to any one of claims 1 to 5, wherein (B) the full ester of pentaerythritol and the aliphatic carboxylic acid is purified with an adsorbent using magnesium, aluminum, or silicon as a main component.

7. The polycarbonate resin composition according to any one of claims 1 to 6, wherein the content of calcium in the component (B) is 1 ppm or less and the content of sodium in the component (B) is 12 ppm or less.

8. The polycarbonate resin composition according to claim 7, wherein the content of calcium in the component (B) is 0.5 ppm or less and the content of sodium therein is 10 ppm or less.

9. A molded article, which is obtained by molding the polycarbonate resin composition according to any one of claims 1 to 8.

## Patentansprüche

1. Polycarbonatharzzusammensetzung, erhalten durch Mischen in 100 Massenteile (A) eines Polycarbonatharzes,
0,1 bis 0,4 Massenteilen (B) eines vollständigen Esters von Pentaerythrit und einer aliphatischen Carbonsäure und
0,1 bis 0,4 Massenteilen (C) eines UV-Absorbers auf Benzotriazolbasis,
worin ein Gehalt von Kalzium und Natrium in der Komponente (B) 15 ppm oder weniger ist, worin der Gehalt von Kalzium und Natrium unter Verwendung der Bedingung und der Anlage wie in dieser Beschreibung angegeben bestimmt wird.

2. Polycarbonatharzzusammensetzung nach Anspruch 1, worin die Komponente (B) ein vollständiger Ester von Pentaerythrit und einer aliphatischen Carbonsäure mit 12 bis 22 Kohlenstoffatomen ist.

3. Polycarbonatharzzusammensetzung nach Anspruch 1 oder 2, worin die Komponente (B) eine Mischung aus einem vollständigen Pentaerythrit-Palmitinsäureester und einem vollständigen Pentaerythrit-Stearinsäureester ist.

4. Polycarbonatharzzusammensetzung nach Anspruch 3, worin ein Mischungsverhältnis zwischen dem vollständigen Pentaerythrit-Palmitinsäureester und dem vollständigen Pentaerythrit-Stearinsäureester in der Komponente (B) 9:1 bis 1:9 ist.

5. Polycarbonatharzzusammensetzung nach einem der Ansprüche 1 bis 4, worin (C) der UV-Absorber auf Benzotriazolbasis 2-(2'-Hydroxy-5'-tert-octylphenyl)benzotriazol und/oder 2,2'-Methylenbis[4-(1,1,3,3-tetramethylbutyl)-6-(2N-benzotriazol-2-yl)phenol] ist.

6. Polycarbonatharzzusammensetzung nach einem der Ansprüche 1 bis 5, worin (B) der vollständige Ester von Pentaerythrit und der aliphatischen Carbonsäure mit einem Adsorbens unter Verwendung von Magnesium, Aluminium oder Silizium als Hauptkomponente gereinigt ist.

7. Polycarbonatharzzusammensetzung nach einem der Ansprüche 1 bis 6, worin der Gehalt von Kalzium in der Komponente (B) 1 ppm oder weniger und der Gehalt an Natrium in der Komponente (B) 12 ppm oder weniger ist.

8. Polycarbonatharzzusammensetzung nach Anspruch 7, worin der Gehalt von Kalzium in der Komponente (B) 0,5 ppm oder weniger und der Gehalt von Natrium darin 10 ppm oder weniger ist.

9. Formgegenstand, erhalten durch Formen der Polycarbonatharzzusammensetzung nach einem der Ansprüche 1 bis 8.

## Revendications

1. Composition de résine de polycarbonate, laquelle est obtenue en mélangeant, dans 100 parties en masse de (A) une résine de polycarbonate,
0,1 à 0,4 partie en masse de (B) un ester complet de pentaérythritol et d'un acide carboxylique aliphatique, et
0,1 à 0,4 partie en masse de (C) un absorbeur d'UV à base de benzotriazole,
dans laquelle une teneur en calcium et en sodium dans le composant (B) est 15 ppm ou moins, dans laquelle la teneur en calcium et en sodium est déterminée en utilisant la condition et l'équipement tel que décrit dans la description.

2. Composition de résine de polycarbonate selon la revendication 1, dans laquelle le composant (B) est un ester complet de pentaérythritol et d'un acide carboxylique aliphatique ayant de 12 à 22 atomes de carbone.

3. Composition de résine de polycarbonate selon la revendication 1 ou 2, dans laquelle le composant (B) est un mélange d'un ester complet de pentaérythritol et d'acide palmitique et d'un ester complet de pentaérythritol et d'acide stéarique.

4. Composition de résine de polycarbonate selon la revendication 3, dans laquelle un rapport de mélange entre l'ester complet de pentaérythritol et d'acide palmitique et l'ester complet de pentaérythritol et d'acide stéarique dans le composant (B) est 9 : 1 à 1 : 9.

5. Composition de résine de polycarbonate selon l'une quelconque des revendications 1 à 4, dans laquelle (C) l'absorbeur d'UV à base de benzotriazole est le 2-(2'-hydroxy-5'-tert-octylphényl)benzotriazole et/ou le 2,2'-méthylènebis[4-(1,1,3,3-tétraméthylbutyl)-6-(2N-benzotriazol-2-yl)phénol].

6. Composition de résine de polycarbonate selon l'une quelconque des revendications 1 à 5, dans laquelle (B) l'ester complet de pentaérythritol et de l'acide carboxylique aliphatique est purifié avec un adsorbant à l'aide de magnésium, d'aluminium ou de silicium en tant que composant principal.

7. Composition de résine de polycarbonate selon l'une quelconque des revendications 1 à 6, dans laquelle la teneur en calcium dans le composant (B) est de 1 ppm ou moins et la teneur en sodium dans le composant (B) est de 12 ppm ou moins.

8. Composition de résine de polycarbonate selon la revendication 7, dans laquelle la teneur en composant (B) est de 0,5 ppm ou moins et la teneur en sodium est de 10 ppm ou moins.

9. Article moulé, lequel est obtenu en moulant la composition de résine de polycarbonate selon l'une quelconque des revendications 1 à 8.
